(19) Europäisches Patentamt / European Patent Office / Office européen des brevets

(11) **EP 2 975 717 B1**

(12) **EUROPEAN PATENT SPECIFICATION**

(45) Date of publication and mention
of the grant of the patent:
**13.06.2018 Bulletin 2018/24**

(51) Int Cl.:
*H02G 9/00* *(2006.01)*     *H02G 3/06* *(2006.01)*

(21) Application number: **14002440.7**

(22) Date of filing: **15.07.2014**

(54) **Trough, method for laying trough, and method for adjusting laying length of trough track**

Trog, Verfahren zum Verlegen eines Trogs und Verfahren zur Anpassung der Verlegungslänge eines Trogwegs

Canalisation, procédé de pose d'une canalisation auge et procédé d'ajustement de longueur de voie d'une canalisation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.01.2016 Bulletin 2016/03**

(73) Proprietor: **Furukawa Electric Co., Ltd.**
**Chiyoda-ku**
**Tokyo 100-8322 (JP)**

(72) Inventors:
• **Wada, Naoto**
**Tokyo, 100-8322 (JP)**
• **Kozawa, Satoshi**
**Tokyo, 100-8322 (JP)**
• **Ando, Kazuya**
**Tokyo, 100-8322 (JP)**
• **Hagiwara, Takuzo**
**Tokyo, 100-8322 (JP)**

(74) Representative: **Strehl Schübel-Hopf & Partner**
**Maximilianstrasse 54**
**80538 München (DE)**

(56) References cited:
JP-A- 2004 153 937     JP-A- 2007 132 007
JP-A- 2007 300 742     JP-A- 2014 011 881

**Description**

TECHNICAL FIELD

The present invention relates to a trough etc., which stores cables, and is laid along railroad tracks and road sides.

BACKGROUND ART

Conventionally, when laying cables along railroad tracks and road sides, troughs are used. When laying such troughs in long distances, troughs of a given length are touched and connected in the longitudinal direction and laid.

As such troughs, for example, a trough with vertical ribs formed on both inside of sidewall surfaces is known. When the trough is cut, the vertical rib on the inside is used as female joint to join with the male joint of the adjoining trough to thereby connect adjoining troughs (Patent Document 1).

Further, a trough with vertical ribs formed on both outside surfaces is known, and when the trough is cut, the vertical rib is used as a male joint to join with the female joint of the adjoining trough (Patent Document 2).

According to the troughs of Patent Document 1 and 2, length adjustment in a length shorter than the length of one trough is possible for a laying length with connected troughs.

RELATED ART DOCUMENT

[Patent Documents]

[Patent Document 1] JP-A-2007-132007
[Patent Document 2] JP-A-2007-300742

SUMMARY OF THE INVEVTION

PROBLEM TO BE SOLVED BY THE INVENTION

However, in Patent Document 1, there is no indication of a method to adjust lengths shorter than the pitch of the vertical rib, or of the dimensions of the male joint and female joint of the trough. Further, because vertical ribs are formed on the inside surface of the trough, the laying process of cables etc. was affected.

On the other hand, in Patent Document 2, as a method for adjusting dimensions smaller than the distance between vertical ribs, a method of slightly shifting the cutting position of the male joint, or adjusting the wrap length of the male joint and female joint is described. However, because there is no description regarding the length of the female joint and the male joint, how to perform length adjustment for any given gap, when connecting a plurality of troughs to form a trough track of given length, is not clear.

Further, in both Patent Documents 1 and 2, angle adjustment at the connective part of the troughs to construct a curved track was not possible. JP 2014 011881 A discloses a trough with the features in the preamble of present claim 1. Another prior art example can be found in JP 2004 153937 A.

MEANS FOR SOLVING THE PROBLEMS

The present invention was made in view of the above-described problems, and its object is to obtain a trough that can be bent and connected to one another, which also has a joint that is applicable to given lengths when connecting a plurality of troughs to form a trough track of any specified length.

In order to achieve the above-described object, the present invention provides a trough as defined in claim 1. Dependent claims 2-10 relate to preferred embodiments.
In accordance with claim 2, the length L1, obtained by subtracting the thickness of the flange of the male joint from the length of the wide section of the female joint, is C/2 or less and C/5 or more.

In accordance with claims 3 and 4, the length L1 is more than or equal to the dimensional variation amount $\delta$ by environmental temperature change, when dimensional variation amount $\delta$ (mm) by environmental temperature change = linear expansion coefficient (mm/°C · m) of the trough material x (temperature width of the environmental temperature change = 85°C) x (length of trough L (m)).

In accordance with claim 5, a protrusion that can absorb stress due to thermal deformation in the longitudinal direction of the trough may be formed on the end face of the male joint of the longitudinal direction of the trough or a part opposite to the end face of the male joint.

In accordance with claim 6, the trough may comprise a bottom wall joint comprising a convex part or a conclave part formed on the underside of the bottom wall of the male joint, and a concave part or a convex part that joins with the convex part or the concave part, formed on the topside of the bottom wall of the female joint, wherein when a plurality of adjoining troughs are connected, the concave part and the convex part of the bottom wall joints join together with a given clearance in a manner that allows mutual angle

In accordance with claim 7, the convex part of one trough and the concave part of another trough at the bottom wall joint may come in contact before the flange and the locking part at the side wall joint come in contact, when the trough undergoes thermal deformation in the longitudinal direction while a plurality of adjoining troughs are connected.

In accordance with claim 8, a protrusion that can absorb stress due to thermal deformation in the longitudinal direction of the trough may be formed on the inside of the concave part.

In accordance with claim 9, the convex part of one trough and the tip of the protrusion inside the concave part of another trough may come in contact before the flange and the locking part at the side wall joint come in contact, when the trough undergoes thermal deformation in the longitudinal direction while a plurality of adjoining troughs are connected.

In accordance with claim 10, the pitch between adjoining vertical ribs may be 12.5 times the width of the vertical rib or less. In such range, deformation of the side walls by pressure from gravel in the laid premises or pressure applied during earthquakes can be prevented.

According to the present invention, stress concentration that occurs when coming in contact with the locking part of the female joint can be reduced. This is because when the tip of the flange of the male joint is angular, the edge of the tip of the flange comes in contact with the locking part of the female joint to cause stress concentration on the flange tip, but by making the tip of the flange of the male joint one of a smooth rounded shape, the stress concentration can be reduced. Further, because the length from the center of the trough to the contact position of the two becomes short, the bending stress on the flange of the male joint can be decreased slightly.

Further, when a plurality of troughs are connected to one another, because mutual angle adjustment is possible, curved tracks can be constructed. In such case, when the tip of the flange of the male joint is of a smooth curve, bending becomes easier when connecting troughs.

Further, by setting the width of the trough at the vertical rib to be narrower than the internal dimension of the trough at the wide section in the width direction, when the trough is cut at the position of the vertical rib and used, the vertical rib can be used as the flange of the male joint. Thus, by cutting the trough at the vertical rib position, the length of the trough can be adjusted and used depending on the necessary trough laying length.

Furthermore, in this case, when the pitch between adjoining vertical ribs (the length between the inside of the ribs added to the width of the rib in the longitudinal direction) is C, if the length L1, which is the movable length of the male joint, obtained by subtracting the thickness of the flange of the male joint from the length of the wide section of the female joint, is C/2 or less, strength at the joint can be assured. Because the strength of the male joint and female joint are lower compared to other parts due to the thickness of the bottom part being thinner etc., if this low-strength part is too large, the rigidity and strength of the male joint decreases. Thus, the length of the male joint should be as short as possible in a usable range.

Further, by setting the length L1 to be more than or equal to the dimensional variation amount $\delta$ by environmental temperature change, the flange of the male joint can move inside the female joint even with dimensional variation due to environmental temperature change, and thus, stress is not applied directly on the trough bodies.

Furthermore, when N (note that N is an integer larger than or equal to 2) is specified so that (1/N)C becomes larger than or equal to the dimensional variation amount $\delta$ by environmental temperature change, and as close to $\delta$ as possible, when the length L1 is larger than or equal to (1/N)C, an any given track length becomes adjustable with an integral number of connecting points.

Further, by forming a protrusion that can absorb stress due to thermal deformation in the longitudinal direction of the trough on the end face of the male joint of the longitudinal direction of the trough or a part opposite to the end face of the male joint, the protrusion smashes when the trough extends by thermal expansion, thereby easing stress and suppressing direct collision of the trough bodies.

Further, by forming a bottom wall joint, and enabling mutual angle adjustment between troughs at the bottom wall joint, construction of curved tracks become possible.

Furthermore, when the trough undergoes thermal deformation in the longitudinal direction, by making sure that the convexed part of one trough and the concaved part of another trough come in contact before the flange and locking part of the side wall joints, excessive stress on the male joint and female joint can be suppressed to be applied.

Further, by forming a protrusion that can absorb stress due to thermal deformation in the longitudinal direction of the trough on the inside of the concaved part, the protrusion smashes when the trough extends by thermal expansion, thereby easing stress and suppressing direct collision of the trough bodies.

In such case, when the trough undergoes thermal deformation in the longitudinal direction, by making sure the convexed part of one trough and the protrusion inside the concaved part of another trough come in contact before the flange and the locking part of the side wall joints, excessive stress on the male joint and female joint can be suppressed to be applied.

Furthermore, by setting the pitch between adjoining vertical ribs to be 12.5 times the width of the vertical rib or less, enough strength of the trough side wall can be assured. Here, when the pitch between adjoining vertical ribs exceed 12.5 times the width of the vertical rib, the side wall of the trough may fall inside due to pressure from gravel laid on both sides of the trough side walls, or deform. The pitch between adjoining vertical ribs must be 12.5 times the width of the vertical rib or less.

Also disclosed is a method for laying trough, which comprises using a trough that has a protrusion that can absorb stress due to thermal deformation in the longitudinal direction of the trough on the end face of the male joint of the longitudinal direction of the trough or on the inside of the locking part of the female joint, and laying one trough so that it comes in contact with the protrusion of another trough, when connecting and laying adjoining troughs.

According to this method, the positioning of each trough becomes easier. Further, when the trough undergoes thermal deformation in an extension direction, the protrusion smashes and stress can be reduced. Furthermore, when the trough undergoes thermal deformation in a contraction direction, because a clearance is assured between the flange and the locking part, direct impartment of stress on the side wall joints can be prevented.

According to the method of claim 11, the trough track length can be adjusted for any given length that is shorter than the distance between the trough ribs. In addition, by combining cutting of the trough at the vertical rib position, the length of the trough track can be adjusted to a length that is an integer multiple of the distance between ribs, in less than the length of one trough.

ADVANTAGEOUS EFFECT OF THE INVENTION

According to the present invention, a trough that enables curving and connecting of one another can be provided.

BRIEF DESCRIPTION OF THE DRAWINGS

FIG 1 is a perspective view of trough 1.
FIG 2 is a top view of the connecting part of the trough, and (a) shows a state of straight connection, and (b) shows a state of curved connection.
FIG 3 is an enlarged view of the connecting part of the trough.
FIG 4 is a top view of the connecting part of the trough, and (a) is a general view, and (b) is an enlarged view.
FIG 5 is a drawing that shows the joint of the bottom wall, and (a) is an upward perspective view, and (b) is a downward perspective view.
FIG 6 is a drawing that shows the joint of the bottom wall, and (a) shows a state prior to joining, and (b) shows a state of joining.
FIG 7 is a drawing that shows the joint of the bottom wall, and (a) shows a state prior to joining, and (b) shows a state of joining.
FIG 8 (a), (b) are drawings that show the concaved part with a protrusion 25 formed inside.
FIG 9 is a conceptual diagram that describes the length adjustment at the trough connecting part.
FIG 10 is a conceptual diagram that describes the length adjustment at the trough connecting part.

DESCRIPTION OF PREFFERD EMBODIEMENTS OF THE INVENTION

(First Embodiment)

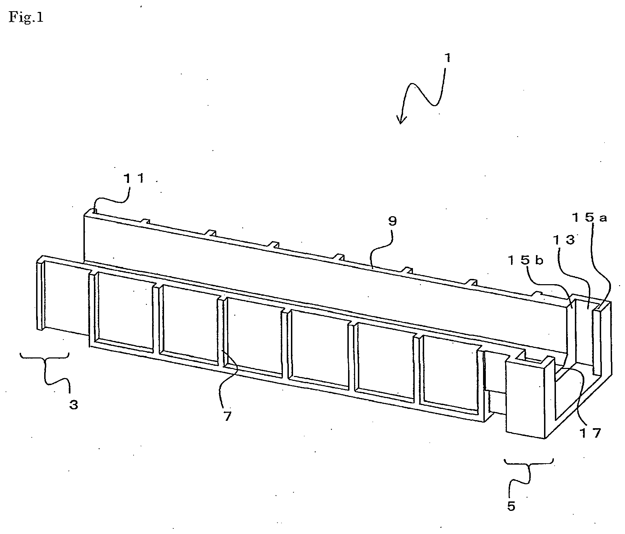

Hereinafter, the trough of the first embodiment will be described in detail with reference to the accompanying figures. FIG 1 is a perspective view of the trough 1. The trough 1 is composed of a bottom wall 17 and a side wall 9. The side wall 9 is formed at the left and right of the bottom wall width-wise. That is, the trough 1 has a top part that opens. Note that on the trough 1 of the present invention, a lid member can be fixed in a state with cables laid inside. Here, the longitudinal direction refers to the direction that connects the male joint 3 and female joint 5, which is parallel to the internal surface of the side wall 9. Further, the width direction refers to a direction of perpendicular to the internal surface of the side wall 9 in a direction of a plane that is perpendicular to the longitudinal direction.

Vertical ribs 7 are formed on the outside of the side wall in a given interval toward the longitudinal direction of the trough 1. The vertical rib 7 is for ensuring strength of the trough 1.

On one end of the trough 1 in the longitudinal direction, a male joint 3 is formed. Further, on the other end of the trough 1 in the longitudinal direction, a female joint 5 is formed.

The male joint 3 is composed of a flange 11 that protrudes toward the outside of the side wall 9. That is, the flange 11 is formed outward in the width direction of the trough 1.

The female joint 5 is composed of a wide section 13 and locking parts 15a, 15b. The locking parts 15a, 15b are formed at the front and back of the wide section 13 in the longitudinal direction of the trough 1. The interior dimension in the width direction of the trough at the wide section 13 is wider than the width (external dimension) of the trough 1 at the flange 11. Further, the interior dimension of the locking parts 15a, 15b in the width direction is narrower than the width of the trough 1 at the flange 11.

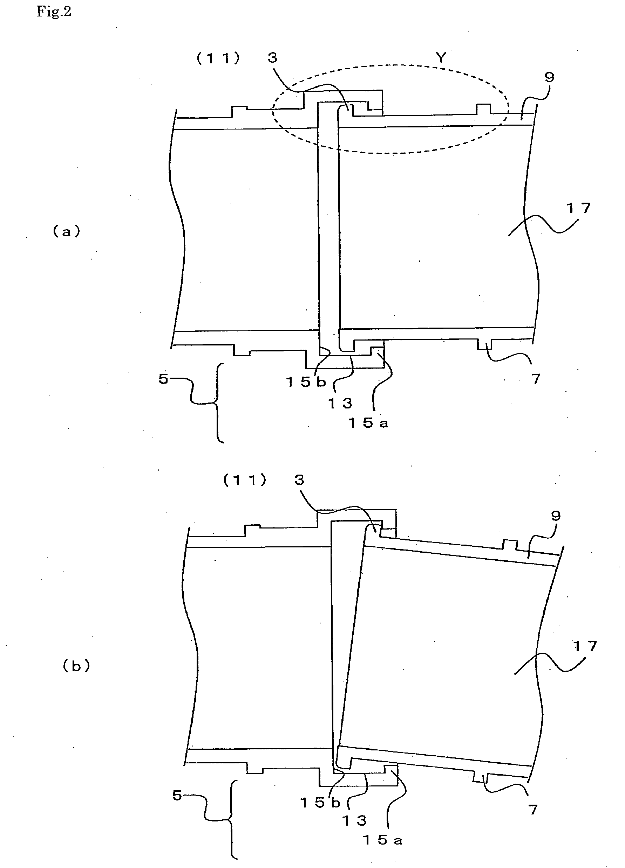

Fig 2(a) is a top view of the connecting part when the troughs 1 are connected in linearly. As described previously, because the interior dimension of the wide section 13 is wider than the width at the flange 11 of the male joint 3, the flange 11 can be inserted in to the wide section 13. Further, because the interior dimension of the locking part 15a, 15b at the front and back of the wide section 13 is narrower than the width at the flange 11, the flange 11 does not fall out from the wide section 13. Thus, the troughs 1 can be connected by joining the male joint 3 and the female joint 5 of one another. Note that in the present invention, the male joint 3 and the female joint 5 may be generically referred to as side wall joints.

The thickness of the bottom wall 17 at the male joint 3 and the thickness of the female joint 5 are set so that a level difference does not occur at the top side of the bottom wall 17 at the connecting part when the troughs 1 are connected. That is, the heights of the bottom wall 17 at the male joint 3 and the height of the bottom wall 17 at the female joint 5 are different, and the thickness of the bottom wall 17 of the male joint 3 and the female joint 5 is thinner than the thickness of the bottom wall 17 at other parts.

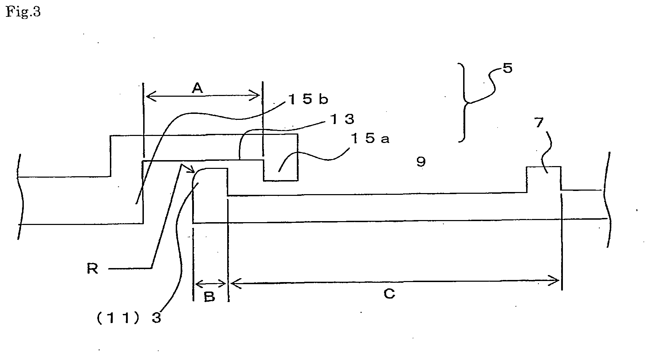

Fig 3 is an enlarged view of the section indicated as Y in Fig 2. As shown in the figure, the length of the wide section 13 of the female joint 5 (the length between the locking parts 15a, 15b) is defined as A and the thickness of the flange 11 of the male joint 3 (the thickness in the longitudinal direction of the trough 1) is defined as B, and the pitch of the vertical ribs 7 is defined as C. A is adequately larger than B. Thus, when the side wall joints are joined, a clearance is formed between the flange 11 and at least one of the locking parts 15a, 15b. Further, a clearance is formed between the edge of the flange 11 in the width direction and the inner surface of the wide section 13.

Here, movable length L1 of the flange 11 of the male joint 3 against the female joint 5 is defined as (A-B). That is, the position of the trough 1 can be adjusted in the longitudinal direction at the connecting part of the trough 1 in the movable length against the female joint 5.

When the length L1 is large, the adjustable width of position adjustment of the trough 1 at one connecting part (in other words, the laying length adjustment) becomes large. Thus, any given laying length of the trough 1 can be achieved without the use of special short troughs etc.

On the other hand, the male joint 3 and female joint 5 have lower strengths than other parts of the trough 1. This is because, even though ribs are formed in the width direction on the bottom side of the trough 1 (not shown in the figure), as with the vertical rib 7, ribs are not formed at the male joint 3 and female joint 5, and also because the thickness of the bottom wall is thinner than other parts due to the bottom walls 17 overlapping. Thus, when the length A of the wide section 13 of the female joint 5 is too large, the strength of the entire trough 1 may become insufficient. That is, when the length L1 is too large, maintaining sufficient strength for the entire trough becomes difficult.

In the present embodiment, the length L1 is desirably 1/2 the pitch C of the vertical ribs or less. That is, it is preferable that (A-B)≤C/2. By doing this, the distance from the adjacent vertical rib 7 does not become too far, and the decrease in strength of the side wall joint can be minimized. Note that the effect of setting the length L1 to 1/N of the pitch C of the vertical rib 7 will be described later.

Furthermore, in the present embodiment, it is preferable that the length L1 is a size that enables absorption of the length change of the trough 1 by temperature change. More specifically, it is preferable that L1 is larger than or equal to $\delta$, when dimensional variation amount $\delta$ (mm) by environmental temperature change = linear expansion coefficient (mm/°C · m) of the trough material x (temperature width of the environmental temperature change) x (length of one trough L (m)).

For example, as the resin that is used for the trough, polyethylene resin and polypropylene resin can be used as conventional substrate resins. However, from the point of environmental measures and costs, recycled resins are preferably used. When the trough 1 material is recycled material, it would be a material mixture of polypropylene resin, polyethylene resin, and other additives. In such a case, the linear expansion coefficient becomes about 0.06 mm/°C · m. Note that when the material is polypropylene used as drink caps, the linear expansion coefficient becomes 0.08-0.1 mm/°C · m, and when the material is high-density polyethylene such as those used in shopping bags, the linear expansion coefficient is in the range of 0.06-0.11 mm/°C · m, and is, for example, 0.10 mm/°C · m. Thus, when the recycled resin is composed of polypropylene and high-density polyethylene, calculation can be performed with the linear expansion coefficient of the recycled material set as about 0.1 mm/°C · m.

Further, the temperature width of the environmental temperature change can be decided from the maximum temperature and minimum temperature of the laying area. For example, since the standard temperature range required for a cable trough in the Network Rail of England (9.1.4) is defined as -20°C±5°C to 55°C±5°C, the temperature width of the environmental temperature change should be in the range of -25°C to 60°C, which calculates to 85°C.

Further, the pitch C between adjoining vertical ribs 7 are preferably 12.5 times the width of the vertical rib 7 (the length in the longitudinal direction) or less. By setting it as such, the rigidity of the trough can be enhanced to ensure strength so that the side wall of the trough 1 does not deform.

Next, a state in which the troughs 1 are connected at angles of each other will be described. Because the outer surface of the male joint 3 and the inner surface of the female joint 5 have clearances in the width direction and the length direction, as shown in Fig 2(b), the troughs 1 can be connected in a curve. Thus, a curved track of the trough 1 can easily be formed. Note that the adjustable range of the angel at the side wall joint is preferably, for example, up to about 5°. For this reason, at the female joint 5, the space formed by the locking parts 15a, 15b facing each other and the wide section 13 should preferably be spacious enough to allow a 5° incline of the flange 11 of the male joint 3 in the space against the female joint in the longitudinal direction of the trough.

Further, when obtaining a trough track with a curve of 5° or more, by consecutively connecting a necessary number of troughs and a applying a curve of a 5° angle one by one at the joint of a plurality of consecutive troughs, if there is a distance of about N times the length of the trough, a trough track with a curve angle of N times 5° can be obtained.

In the present embodiment, the tip of the flange 11 (the edge of the tip of the trough 1 in the longitudinal direction) is of a smooth rounded shape. That is, the tip of the flange 11 is composed of a curve of an arc.

On the other hand, the edge of the inner surface of the female joint is formed of a square. That is, at the boundary of the locking parts 15a, 15b at the front and back of the wide section 13, an R shape more than the R shape unavoidably formed during production is not formed, and is of an angular shape.

By having an R shape at the tip of the flange 11, as shown in Fig 2(b), the permissible range of the curve when connecting at an angle can be widened. That is, further curving is regulated by the tip of the flange 11 coming in contact with the inner surface of the female joint 5, but because the angular edge of the tip is removed, this permissible range of curve can be made larger.

Further, when the troughs 1 are connected in a curve, the tip of the male joint 3 comes in contact with the inner surface of the wide section 13 or the locking part 15b of the female joint 5. Thus, when the tip of the flange 11 of the male joint 3 is angular, stress concentration on the tip of the flange 11 may occur. In contrast, when the tip of the flange 11 is of a smooth curve, such stress concentration can be reduced.

Further, by rounding the tip of the flange 11, the length from the center of the trough 1 in the width direction to the tip of the flange 11 becomes shorter. Thus, the bending stress (moment) acting on the flange 11 of the male joint 3 can be slightly reduced.

Note that when the tip of the flange 11 of the male joint 3 is rounded, taking in consideration the precision variation in resin mold and the stability of the stress reducing effect, the radius of curvature R (see Fig 3) is preferably 3 mm or more, and more preferably, 4 mm or more. When the radius of curvature R at the tip of the flange 11 is too small, the above-described effects of having an R-shape cannot be achieved. Note that when R is too large, the thickness of the flange 11 becomes thin. Thus it is preferable that R is less than the length B of the flange 11.

As described above, according to the embodiment of the present invention, because the male joint 3 and female joint 5 join with a clearance, the troughs 1 can easily be bent and connected. Therefore, a curved trough track can easily be formed. In such case, because the tip of the flange 11 of the male joint 3 is of a rounded shape, the angle adjustment range is wide, and stress concentration on the tip of the flange 11 and bending stress acting upon the flange 11 can be reduced.

Further, because the clearance between the male joint 3 and the female joint 5 (L1) is 1/2 the pitch between the vertical ribs 7 or less, compared to when it is equal to the vertical rib 7, strength reduction of the side wall joint can be suppressed.

(Second Embodiment)

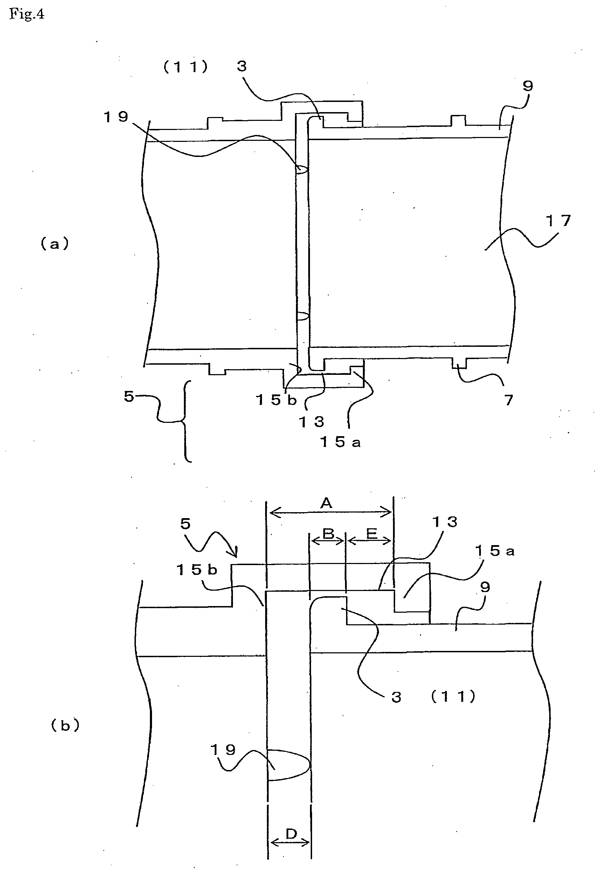

Next, a second embodiment will be described. Fig 4(a) is a top view of the vicinity of the side wall joints of the trough of the second embodiment, and Fig 4(b) is an enlarged view. Note that in the following description, components that are the same as those of the first embodiments will be referred to with the same notations as those used in Fig 1 to Fig 3, and redundant description will be abbreviated.

The second embodiment is almost the same in composition as the first embodiment, but differs in the fact that a protrusion 19 is formed on the bottom wall step part on the female joint 5 side, which is opposite the end surface on the male joint 3 side of the trough 1.

The protrusion 19 absorbs the dimension change that occurs due to thermal expansion of the trough 1. Thus, the height D of the protrusion 19 is preferably larger than or equal to the aforementioned $\delta$. However, in reality, the thermal expansion does not occur throughout the entire temperature change range, and parts that undergo thermal contraction are included, too. Hence, the height D of the protrusion 19 may be set to 1/2 of $\delta$ or more.

In this case, when the trough 1 extends by thermal expansion, the protrusion 19 is gradually crushed to absorb the length change in the trough 1. For this reason, the large compression stress applied to the trough 1 by the toughs 1 colliding directly with one another can be suppressed.

Note that although when the height D of the protrusion 19 is 1/2 of $\delta$, there is a chance that the trough 1 undergoes thermal expansion in a degree larger than the height of the protrusion 19, in reality, due to the distortion absorption tolerance by the elastic compression deformation of the entire body of the trough 1, the trough 1 does not break.

When the protrusion 19 is formed, to lay the trough 1, it is preferable that the troughs 1 are laid so that the end surface of one trough 1 comes in contact with the protrusion 19 of the other trough 1. By doing so, as shown in the figure, a clearance E (=A-B-D) is acquired between the flange 11 and the locking part 15a on the tip side. For this reason, when the trough 1 contracts by thermal change, the flange 11 does not immediately come in contact with the locking part 15a. Thus, a deformation margin in the length of the clearance E at the back of the male joint can be acquired with certainty. Note that in this case, the contractible length at contraction becomes E.

According to the second embodiment, because a protrusion 19 is formed to absorb the deformation caused by thermal deformation of the trough 1, high compression stress acting on the trough 1 body, due to the troughs 1 coming in contact immediately, can be suppressed.

Further, in laying the trough 1, by laying so that the end surface of the trough 1 comes in contact with the protrusion 19, the positioning of the trough 1 becomes easier. Further, when positioning of the trough 1 is performed in this manner, the clearance E at the back of the male joint can be acquired with certainty.

Note that the protrusion 19 is exemplified as being arranged on the end of the trough 1 at the female joint 5 side (the surface that faces the adjoining trough 1), it may be formed on the end of the trough 1 at the male joint 3 side.

(Third Embodiment)

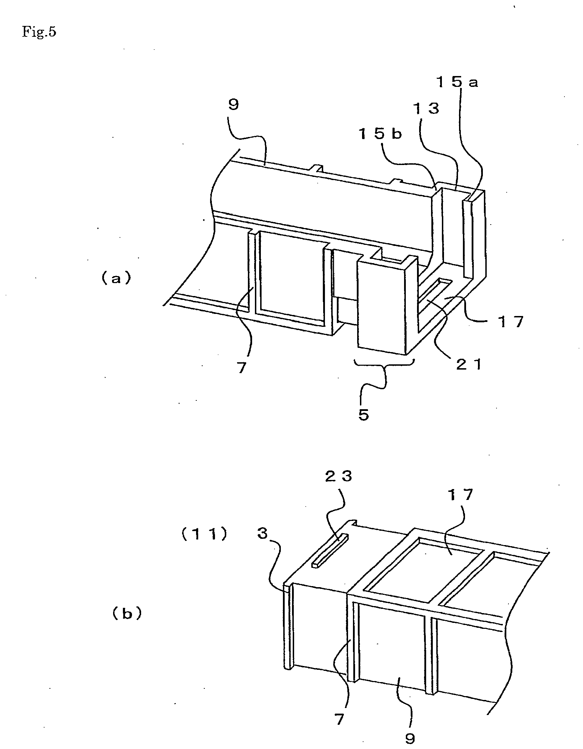

Next, a third embodiment will be described. Fig 5(a) is an upward perspective view of the trough and Fig 5(b) is an downward perspective view of the trough according to the third embodiment. The third embodiment is almost the same in composition as the first embodiment, but differs in the fact that a convexed part 23 and a concaved part 21 are formed on the bottom wall 17 of the trough.

On the top surface of the bottom wall 17 of the female joint 5, a concaved part 21 is formed. Further, on bottom surface of the bottom wall 17 of the male joint, a convexed part 23 is formed. The protruding height of the convexed part 23 is less than the depth of the concaved part 21. Further, the size of the convexed part 23 is smaller than the size of the concaved part 21.

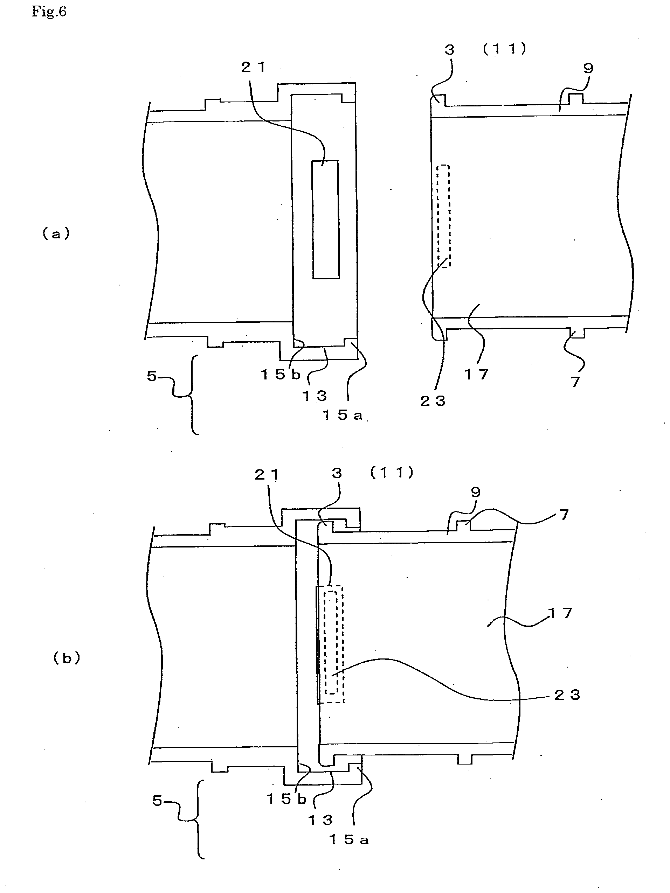

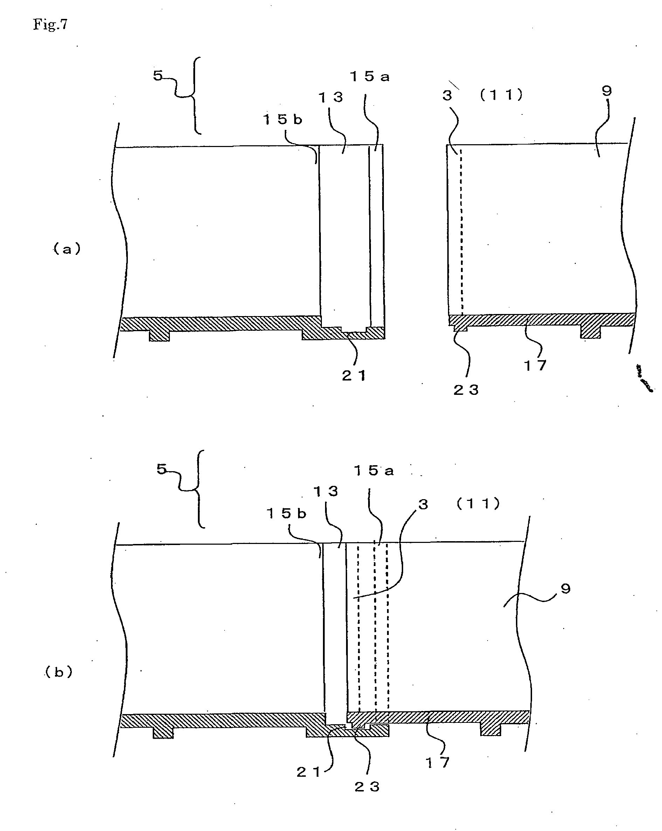

When troughs 1 are connected the convexed part 23 fits into the concaved part 21. Fig 6(a) is top view that shows the state prior to joining, and Fig 6(b) shows the state of joining, Fig 7(a) is a sectional view in the longitudinal direction of the state indicated in Fig 6(a), and Fig 7(b) is a sectional view in the longitudinal direction of the state indicated in Fig 6(b).

When troughs 1 are connected the convexed part 23 fits into the concaved part 21. Because the size of the concaved part 21 is sufficiently larger than the size of the convexed part 23, a clearance is formed between the inner walls of the convexed part 23 and the concaved part 21. In this manner, because the convexed part 23 and the concaved part 21 fit with each other with a specific clearance, the troughs 1 can undergo mutual angle adjustment. Note that in the present invention, concaved part 21 and the convexed part 23 may be generically referred to as the bottom wall joints.

Here, the clearance in the longitudinal direction at the bottom wall joints is smaller than the movable length of the male joint in the female joint of the side wall joints. Further, the convexed part 23 is provided so that its position comes near the center of the concaved part 21 in the longitudinal direction, when the troughs 1 are connected and the flange 11 is placed near the center of the wide section 13 of the female joint 5 in the longitudinal direction. By doing so, when the trough 1 is moved in the longitudinal direction, the walls of the convexed part 23 and the concaved part 21 come in contact before the flange 11 comes in contact with the locking parts 15a, 15b.

Thus, when the trough undergoes thermal deformation and extends or contracts in the longitudinal direction, the bottom wall joints first receive the stress, and stress is not immediately applied on the side wall joints. Because the bottom wall joints receive stress from the bottom wall 17 of the trough 1, the allowable stress is larger than that for the locking parts 15a, 15b that receive bending stress. Hence, breaking of the side wall joints can be prevented. Note that when the distortion of the concaved part 21 and the convexed part 23 proceed, the side wall joints may come in contact to cover for any stress exceeding that.

Further, when a protrusion 19 is formed on the side wall joints, the protrusion 19 of the side wall joints and the end surface of the trough 1 on the opposite come in contact, and further, during the process of crushing of the protrusion 19 by the thermal deformation of the trough, such as expansion, the walls of the convexed part 23 and the concaved part 21 come in contact. By doing so, the protrusion on the side wall joints come in contact with the end surface of the trough, but the flange on the side wall joint and the locking part never comes in contact. Thus, the direct contact between the flange of the side wall joint and the locking part can be avoided, due to the contact of the protrusion of the side wall joint and the trough end surface, as well as the walls of the bottom wall joints, and stress caused by the expansion and contraction of the trough can be covered by the deformation of the protrusion in the side wall joint and the fitting of the bottom wall joints.

According to the third embodiment, by forming a bottom wall joint, the troughs can be connected more tightly. In such case, because a clearance is formed between the convexed part 23 and the concaved part 21, the trough 1 can be bent and connected.

Further, by making sure the bottom wall joints come in contact before the side wall joints when the trough 1 is moved in the longitudinal direction, the bottom wall joints can cover the stress before the side wall joints during thermal deformation. Hence, breaking of the side wall joints can be prevented.

Note that even though an example wherein a concaved part 21 is formed on the top surface of the bottom wall 17 of the female joint 5, and a convexed part 23 is formed on the bottom surface of the bottom wall 17 of the male joint 3, a convexed part 23 may be formed on the top surface of the bottom wall 17 of the female joint 5, and a concaved part 21 may be formed on the bottom surface of the bottom wall 17 of the male joint 3.

(Fourth Embodiment)

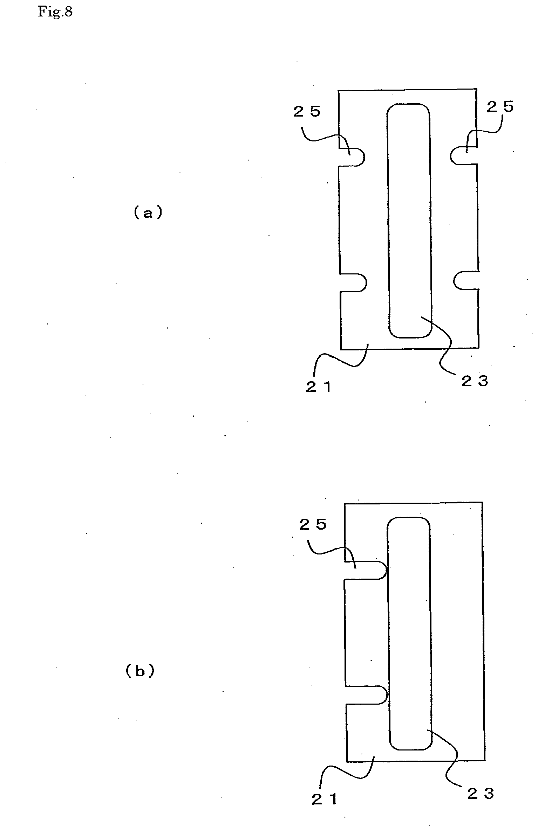

Next, a fourth embodiment will be described. Fig 8(a) is a drawing that indicates the shape of the concaved part 21 and the convexed part 23 of the bottom wall joints of the fourth embodiment. The fourth embodiment is almost the same in composition as the third embodiment, but differs in the fact that a protrusion 25 is formed on the inside surface of the concaved part 21 of the bottom wall joints.

On the inside surface of the walls at the front and back of the concaved part 21 of the bottom wall joints in the longitudinal direction of the trough 1, protrusions 25 are formed facing toward the direction of the center of the concaved part 21. The protrusions 25 have similar functions as the aforementioned protrusion 19.

For example, when the trough 1 undergoes thermal deformation in the longitudinal direction by thermal expansion from the state shown in Fig 8(a), the convexed part 23 of the bottom wall joints comes in contact with the protrusion 25. Further, when the trough 1 undergoes thermal deformation in the longitudinal direction, the protrusion 25 on the bottom wall joint crush and deform to absorb the thermal deformation of the trough 1. Thus, when the trough 1 undergoes thermal deformation, the convexed part 23 of the bottom wall joint immediately comes in contact with the wall of the concaved part 21, and the application of high compression stress on the trough 1 body can be prevented.

Note that the protrusion 25 does not have to be formed on both inside surfaces at the front and back of the concaved part 21 of the bottom wall joints. For example, as shown in Fig 8(b), they may be formed on one side of the inside surface of the concaved part 21 of the bottom wall joints. In such case, as with the aforementioned protrusion 19, when the troughs 1 are laid, it is preferable that they are laid so that the convexed part 23 of the bottom wall joint comes in contact with the protrusion 25. By doing this, a crush margin is provided on one side and a clearance is acquired with certainty on the other side.

Further, in the above-described relationship with the side wall joints, it is preferable that the contact between the convexed part 23 of the bottom wall joint and the protrusion 25 occurs before the contact between the flange 11 of the side wall joints and the locking parts 15a, 15b. By doing so, the stress applied on the side wall joints can be reduced.

According to the fourth embodiment, because a protrusion 25 is formed on the concaved part 21 of the bottom wall joints, the protrusion 25 crushes before the convexed part 23 comes in contact with the wall of the concaved part 21, thermal deformation of the trough 1 can be absorbed.

(Fifth Embodiment)

Next, trough length adjustment of the fifth embodiment will be described. When troughs 1 are connected and laid, the track length of the trough does not always become an integral multiplication of the length of the joint subtracted from the length of the trough 1. Thus, for length adjustment against the track length, shorter troughs need to be used. However, preparing troughs of multiple sizes are problematic in terms of cost and workability.

Hence, in the present invention, to enable length adjustment of the trough 1, the vertical ribs 7 can be used as the flange 11 of the male joint 3. More specifically, the vertical rib 7 positioned at the end part of the cut trough 1 is made to be joinable with the female joint 5 as with the flange 11, by cutting at the vertical rib 7 positions.

To enable this, the width of the trough 1 at the vertical rib 7 is made to be about the same as the width of the trough 1 at the flange 11. That is, the width of the trough 1 at the vertical rib 7 position is narrower than the inner width of the trough 1 at the wide section 13, and wider than the interior dimension of the trough in the width direction at the locking part 15a, 15b. Note that the thickness of the vertical rib 7 (the length in the longitudinal direction of the trough 1) is preferably about the same as the length of the flange 11.

Further, the pitch between adjoining vertical ribs 7 and the pitch between a vertical ribs 7 positioned at the end side of the male joint 3 side and the flange 11 is preferably about the same. They may be shorter than the pitch between adjoining vertical ribs 7, but should be larger than the movable length of the male joint 3 against the female joint 5.

When cutting at the vertical rib 7 position, ribs in the longitudinal direction that connect between the vertical ribs 7 and the ribs on the bottom surface side of the bottom wall 17 need to be removed, as well. That is, when the vertical rib 7 is used as the flange 11, other ribs and the bottom surface side of the bottom wall must be removed so that the shape of the vicinity of the cut part is similar to that of the male joint 3.

By doing so, length adjustment of the track length according to the pitch of the vertical rib 7 of the trough 1 becomes possible. However, even in this method, length adjustment in a dimension smaller than the pitch of the vertical rib 7 cannot be performed.

Thus, in the present invention, adjustment of lengths shorter than the pitch of the vertical rib 7 is absorbed at the joint.

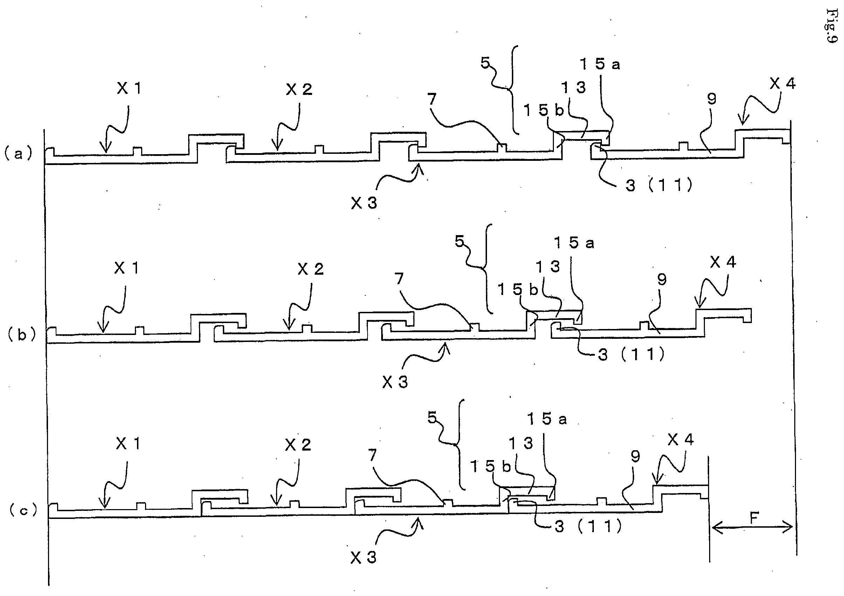

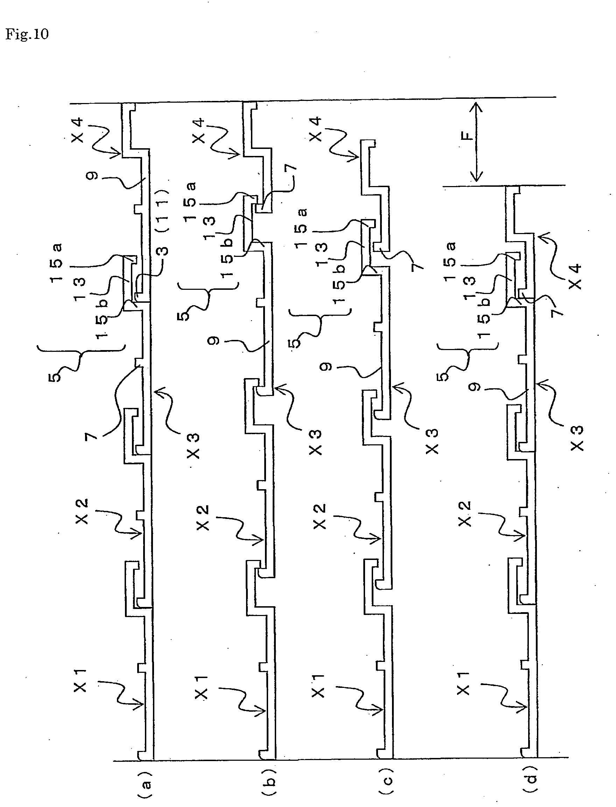

Fig 9 and 10 are conceptual diagrams that describe the length adjustment at the trough connecting part. In the figures, X1 to X4 schematically indicate the troughs, and on both sides, male joints 3 and female joints 5 are provided. Vertical ribs are usually provided at multiple places, but for simplicity, in Fig 9 and Fig 10, an example with one vertical rib 7 formed are shown.

In the state of Fig 9(a), the flanges 11 are all in contact with the locking part 15a at the tip side on all side wall joints. That is, the longest possible connection for each side wall joint is shown.

In contrast, Fig 9(b) shows a state wherein the flange 11 is positioned at about the center of the wide section 13 in the longitudinal direction for each side wall joint, and Fig 9(c) shows a state wherein the flanges 11 are all in contact with the locking part 15b on the base side for each side wall joint. That is, in Fig 9(c), the shortest possible connection for each side wall joint is shown.

As described above, by adjusting the joint positions of the male joint 3 and the female joint 5 in the side wall joints, the laying length can be adjusted to any given length within the maximum adjustment margin (F in the figure). The maximum adjustment margin in this case, is NxL1, that is N times the movable length L1 of the male joint within the female joint.

Fig 10(a) shows a state that is the same as Fig 9(c). In contrast, FIG 10 (b) shows a state wherein the male joint 3 side of trough X4 is cut down to the position of the vertical rib 7, and then connected. That is, at the connecting part of trough X3 and trough X4, the vertical rib 7 joins the female joint 5 of trough X3. In this case, the vertical rib 7 of trough X4 functions as the flange 11 of the male joint 3.

Note that in Fig 10(b), the flange 11 and the vertical rib 7 are in contact with the locking part 15a on the tip side in all of the side wall joints. That is, it shows the longest possible state of connection at the side wall joints.

In such case, for the length of the state of Fig 10(a) and the state of Fig 10(b) to be the same, Nx(A-B) (see Fig 3), that is N times the movable length L1 of the male joint in the female joint (L1 corresponds to A-B), must be equal to the pitch C of the vertical rib 7 (see Fig 3). That is, Nx(A-B)=C. By doing so, in N numbers of connecting parts, the length may be adjusted up to one pitch of the vertical rib 7. More specifically, in the case of Fig 10, by 3 connecting ponts, adjustment in the length of 1 pitch of the vertical rib is made possible.

Fig 10(c) shows a state in which the position of the flange 11 (vertical rib 7) is positioned to about the center of the wide section 13 in the longitudinal direction for all of the side wall joints. In Fig 10(d), the flange 11 (vertical rib 7) is in a state of contact with the locking part 15b of the base side for all of the side wall joints. That is, in Fig 10(d), the state of the shortest possible connection for each side wall joint is shown. In the case of Fig 10(d), by connecting at 3 places of the troughs, the length becomes shorter by the length of F, which amounts to the distance between the vertical ribs, than the connection length in Fig 10(a).

Thus, by cutting the vertical rib 7 for 1 pitch in one trough, the joining position of the male joint 3 and the female joint 5 of the side wall joints can be adjusted, and the laying length can further be adjusted. Note that in such case, as described previously, the maximum adjustment margin (indicated as F in the figure) becomes NxL1 when there are N numbers of connecting parts. Further, in order to shorten the laying length, another trough may be cut down by 1 pitch of the vertical rib 7.

Thus, by setting the clearance between the male joint 3 and the female joint 5 so that the relationship of (A-B)=(1/N)C is obtained, and combining cutting in the length of one pitch of the vertical rib 7 or its integral multiplication with the position adjustment of the joint, the track length can be adjusted to any given length.

Note that, as described previously, it is preferable that the length L1 is larger than the dimensional variation amount $\delta$ by environmental temperature change. Thus, it is preferable that N (note that N is an integer larger than or equal to 2) is specified so that (1/N)C becomes larger than or equal to the dimensional variation amount $\delta$ by environmental temperature change, and as close to $\delta$ as possible. In this case, if the length L1 is larger than or equal to (1/N)C, laying length of any given length shorter than one pitch of the vertical rib 7 becomes possible. At N numbers of connecting points, the trough laying length can be adjusted with certainty.

Note that in Fig 9 and Fig 10, examples wherein N=3 were shown, but N may be set to any given value, as long as it is an integer of 2 or more. However, although the larger N is, the shorter the length of the part of the male joint that is movable within the female joint of the side wall joint, leading to higher rigidity of the male joint, and is advantageous, when N is too large, the number of troughs that needs position adjustment becomes large in order to adjust laying length, leading to poor workability. Thus, N is preferably 5 or less. This way, the laying length can be adjusted to any given length in at least five connecting points.

As described above, in the present invention, by setting the clearance between the male joint 3 and the female joint 5 as previously described, the laying length of the trough can be adjusted to any given length lower than or equal to one pitch of the vertical rib.

Although preferred embodiments of the present invention have been described above with reference to the accompanying figures, the present invention is not limited to such examples. It should be obvious to those in the field that examples of various changes and modifications are conceivable within the realm of the technical idea disclosed in the present specification, and it should be understood that such examples are justifiably included in the technical scope of the present invention.

DESCRIPTION OF NOTATION

| 1 | trough(s) |
| 3 | male joint |
| 5 | female joint |
| 7 | vertical rib(s) |
| 9 | side wall |
| 11 | flange |
| 13 | wide section |
| 15a, 15b | locking part(s) |
| 17 | bottom wall |
| 19 | protrusion |
| 21 | concaved part |
| 23 | convexed part |
| 25 | protrusion |

**Claims**

1.  A trough (1) with a top part that opens, comprising left and right side walls (9) and a bottom wall (17), wherein a plurality of vertical ribs (7) are provided at a given interval along the longitudinal direction of the trough (1) on the outside of the side wall (9) of the trough (1), and
a side wall joint (3, 5) is formed on the side wall (9), wherein
the side wall joint (3, 5) comprises

    a male joint (3) that is provided on one end of the side wall (9) in the longitudinal direction and
    a female joint (5), which can be joined to the male joint (3) of the other trough (1), that is provided on another end of the side wall (9) in the longitudinal direction, wherein

    the male joint (3) is a flange (11) that protrudes outward in the width direction, which is formed on the outside of the side wall (9), and
    the female joint (5) comprises a wide section (13) that has an inner dimension in the width direction that is wider than the width of the trough (1) at the flange (11), and a locking part (15a, 15b) that is formed at the front and back of the wide section (13) of the trough (1) in the longitudinal direction, whose inner dimension in the width direction of the trough (1) is narrower than the width of the flange (11), wherein
    the tip of the flange (11) of the male joint (3) is of a smooth rounded shape and the inside of the female joint (5) is angular, and
    the male joint (3) and female joint (5) of the side wall joints (3, 5) of a plurality of adjoining troughs are joined together with a given clearance and are connectable so as to enable mutual angle adjustment,
    the width of the trough (1) at the position of the vertical ribs (7) are narrower than the internal dimension of the trough (1) in the width direction at the wide section (13), and further, wider than the internal dimension of the trough (1) in the width direction at the locking part (15a, 15b),
    **characterised in that** when C is defined as the pitch between adjoining vertical ribs (7), and L1 is defined as the length obtained by subtracting the thickness (B) of the flange (11) of the male joint (3) from the length (A) of the wide section (13) of the female joint (5),

the length L1 is larger than or equal to (1/N)C, when N is an integer larger than or equal to 2 and specified so that (1/N)C becomes larger than or equal to the dimensional variation amount δ by environmental temperature change, and as close to δ as possible.

2.  The trough (1) according to Claim 1, wherein the length L1 is C/2 or less and C/5 or more.

3.  The trough (1) according to Claim 1 or 2, wherein the length L1 is more than or equal to the dimensional variation amount δ by environmental temperature change, when

dimensional variation amount δ (mm) by environmental temperature change = linear expansion coefficient (mm/°C·m) of the trough material x (temperature width of the environmental temperature change) x (length of trough L (m)).

4.  The trough (1) according to Claim 3, wherein the width of the environmental temperature change is 85°C.

5.  The trough (1) according to any one of Claim 1 to Claim 4, wherein a protrusion (19) that can absorb stress due to thermal deformation in the longitudinal direction of the trough (1) is formed on the end face of the longitudinal direction of the male joint (3) of the trough (1) or a part opposite to the end face of the male joint (3).

6.  The trough (1) according to any one of Claim 1 to Claim 4, which comprises
    a bottom wall joint comprising
    a convex part (23) or a concave part (21) formed on the underside of the bottom wall (17) of the male joint (3), and
    a concave part (21) or a convex part (23) that joins with the convex part (23) or the concave part (21), formed on the topside of the bottom wall (17) of the female joint (5), wherein
    when a plurality of adjoining troughs are connected, the concave part (21) and the convex part (23) of the bottom wall joints join together with a given clearance in a manner that allows mutual angle adjustment.

7.  The trough (1) according to Claim 6, wherein the convex part (23) of one trough (1) and the concave part (21) of another trough (1) at the bottom wall joint come in contact before the flange (11) and the locking part (15a, 15b) at the side wall joint (3, 5) come in contact, when the trough (1) undergoes thermal deformation in the longitudinal direction while a plurality of adjoining troughs are connected.

8.  The trough (1) according to Claim 6, wherein a protrusion (25) that can absorb stress due to thermal deformation in the longitudinal direction of the trough (1) is formed on the inside of the concave part (21).

9.  The trough (1) according to Claim 8, wherein the convex part (23) of one trough (1) and the tip of the protrusion (25) inside the concave part (21) of another trough (1) come in contact before the flange (11) and the locking part (15a, 15b) at the side wall joint (3, 5) come in contact, when the trough (1) undergoes thermal deformation in the longitudinal direction while a plurality of adjoining troughs are connected.

10. The trough (1) according to any one of Claim 1 to Claim 9, wherein the pitch between adjoining vertical ribs (7) is 12.5 times the width of the vertical rib (7) or less.

11. A method for adjusting laying length of trough track, which comprises
    using the trough (1) of Claim 2,
    making adjustments to the laying length of the trough track in any given length less than or equal to the distance between the ribs of the trough (1) by connecting and laying two or more and five or less adjoining troughs, and further, making adjustments in a given length that is less than or equal to the length of one trough (1) by connecting a trough (1) that is cut at the vertical rib position.

**Patentansprüche**

1.  Trog (1) mit einem zu öffnenden Oberteil, linken und rechten Seitenwänden (9) und einer Bodenwand (17), wobei mehrere vertikale Rippen (7) in einem vorgegebenen Abstand entlang der Längsrichtung des Trogs (1) auf der Außenseite der Seitenwand (9) des Trogs (1) vorgesehen sind und
eine Seitenwandverbindung (3, 5) an der Seitenwand (9) ausgebildet ist, wobei
die Seitenwandverbindung (3, 5) aufweist:

ein männliches Verbindungsteil (3), das an einem Ende der Seitenwand (9) in der Längsrichtung vorgesehen ist, und
ein weibliches Verbindungsteil (5), das mit dem männlichen Verbindungsteil (3) des anderen Trogs (1) verbunden werden kann, der an einem anderen Ende der Seitenwand (9) in der Längsrichtung vorgesehen ist, wobei

das männliche Verbindungsteil (3) ein Flansch (11) ist, der in der Breitenrichtung nach außen hervorragt und an der Außenseite der Seitenwand (9) gebildet ist, und
das weibliche Verbindungsteil (5) einen breiten Abschnitt (13) aufweist, der eine Innenabmessung in der Breitenrichtung aufweist, die breiter ist als die Breite des Trogs (1) an dem Flansch (11), sowie ein Verriegelungsteil (15a, 15b), das an der Vorder- und Rückseite des breiten Abschnitts (13) des Trogs (1) in der Längsrichtung gebildet ist, wobei dessen Innenabmessung in der Breitenrichtung des Trogs (1) schmaler ist als die Breite des Flansches (11), wobei
die Spitze des Flansches (11) des männlichen Verbindungsteils (3) eine glatte gerundete Form hat und die Innenseite des weiblichen Verbindungsteils (5) eckig ist, und
das männliche Verbindungsteil (3) und das weibliche Verbindungsteil (5) der Seitenwandverbindung (3, 5) von mehreren benachbarten Trogen miteinander mit einem vorgegebenen Zwischenraum verbunden und unter Ermöglichung einer wechselseitigen Winkelanpassung anschließbar sind,
die Breite des Trogs (1) an der Position der vertikalen Rippen (7) schmaler ist als die innere Abmessung des Trogs (1) in der Breitenrichtung an dem breiten Abschnitt (13) und ferner breiter als die innere Abmessung des Trogs (1) in der Breitenrichtung an dem Verriegelungsteil (15a, 15b),
**dadurch gekennzeichnet, dass**, wenn C als der Abstand zwischen benachbarten vertikalen Rippen (7) definiert ist, und L1 als die Länge definiert ist, die durch Subtraktion der Dicke (B) des Flansches (11) des männlichen Verbindungsteils (3) von der Länge (A) des breiten Abschnitts (13) des weiblichen Verbindungsteils (5) erhalten wird, die Länge L1 mindestens so groß ist wie (1/N)C, wenn N eine ganze Zahl größer oder gleich 2 ist, und so spezifiziert ist, dass (1/N)C mindestens so groß ist wie der Abmessungsvariationsbetrag $\delta$ durch Umgebungstemperaturänderungen und so nah an $\delta$ wie möglich.

2. Trog (1) nach Anspruch 1, wobei die Länge L1 höchstens C/2 und mindestens C/5 beträgt.

3. Trog (1) nach Anspruch 1 oder 2, wobei die Länge L1 mindestens so groß ist wie der Abmessungsvariationsbetrag $\delta$ durch Umgebungstemperaturänderungen, wenn
Abmessungsvariationsbetrag $\delta$ (mm) durch Umgebungstemperaturänderungen = linearer Expansionskoeffizient (mm/°C·m) des Trogmaterials x (Temperaturbreite der Umgebungstemperaturänderung) x (Länge des Trogs L (m)).

4. Trog (1) nach Anspruch 3, wobei die Breite der Umgebungstemperaturänderung 85°C beträgt.

5. Trog (1) nach einem der Ansprüche 1 bis 4, wobei ein Vorsprung (19), der Spannung aufgrund von thermischer Deformation in der Längsrichtung des Trogs (1) absorbieren kann, an der Endseite der Längsrichtung des männlichen Verbindungsteils (3) des Trogs (1) oder einem zu der Endseite des männlichen Verbindungsteils (3) entgegengesetztem Teil gebildet ist.

6. Trog (1) nach einem der Ansprüche 1 bis 4, der aufweist:

eine Bodenwandverbindung mit
einem konvexen Teil (23) oder einem konkaven Teil (21), das an der Unterseite der Bodenwand (17) des männlichen Verbindungsteils (3) ausgebildet ist, und
einem konkaven Teil (21) oder einem konvexen Teil (23), das mit dem konvexen Teil (23) oder dem konkaven Teil (21) verbindbar ist, das auf der Oberseite der Bodenwand (17) des weiblichen Verbindungsteils (5) ausgebildet ist, wobei
wenn mehrere benachbarte Troge angeschlossen sind, das konkave Teil (21) und das konvexe Teil (23) der Bodenwandverbindungen miteinander mit einem vorgegebenen Zwischenraum in einer Weise verbunden sind, die eine wechselseitige Winkelanpassung erlaubt.

7. Trog (1) nach Anspruch 6, wobei das konvexe Teil (23) eines Trogs (1) und das konkave Teil (21) eines anderen Trogs (1) an der Bodenwandverbindung in Kontakt kommen, bevor der Flansch (11) und das Verriegelungsteil (15a, 15b) an der Seitenwandverbindung (3, 5) in Kontakt kommen, wenn der Trog (1) eine thermische Deformation in der Längsrichtung erfährt, während mehrere benachbarte Troge angeschlossen sind.

8. Trog (1) nach Anspruch 6, wobei ein Vorsprung (25), der Spannung aufgrund von thermischer Deformation in der Längsrichtung des Trogs (1) absorbieren kann, an der Innenseite des konkaven Teils (21) gebildet ist.

9. Trog (1) nach Anspruch 8, wobei der konvexe Teil (23) eines Trogs (1) und die Spitze des Vorsprungs (25) innerhalb des konkaven Teils (21) eines anderen Trogs (1) in Kontakt kommen, bevor der Flansch (11) und das Verriegelungsteil (15a, 15b) an der Seitenwandverbindung (3, 5) in Kontakt kommen, wenn der Trog (1) eine thermische Deformation in der Längsrichtung erfährt, während mehrere benachbarte Troge angeschlossen sind.

10. Trog (1) nach einem der Ansprüche 1 bis 9, wobei der Abstand zwischen benachbarten vertikalen Rippen (7) höchstens das 12,5-fache der Breite der vertikalen Rippen (7) beträgt.

11. Verfahren zum Anpassen der Legelänge eines Trogstrangs, in dem
der Trog (1) nach Anspruch 2 verwendet wird,
Anpassungen an die Legelänge des Trogstrangs in irgendeiner vorgegebenen Länge gemacht werden, die höchstens der Entfernung zwischen den Rippen des Trogs (1) entspricht, indem mindestens zwei und höchstens fünf benachbarte Troge verbunden und gelegt werden, und ferner Anpassungen in einer vorgegebenen Länge gemacht werden, die höchstens der Länge eines Trogs (1) entspricht, indem ein Trog (1) angeschlossen wird, der an der Position der vertikalen Rippe abgeschnitten ist.

## Revendications

1. Auge (1) avec une partie supérieure qui s'ouvre, comprenant des parois latérales gauche et droite (9) et une paroi inférieure (17), dans laquelle
une pluralité de nervures verticales (7) sont disposées à un intervalle donné le long du sens longitudinal de l'auge (1) sur l'extérieur de la paroi latérale (9) de l'auge (1), et
une articulation (3, 5) de paroi latérale est formée sur la paroi latérale (9), dans laquelle
l'articulation (3, 5) de paroi latérale comprend

   une articulation mâle (3) qui est disposée sur une extrémité de la paroi latérale (9) dans le sens longitudinal et une articulation femelle (5), qui peut être jointe à l'articulation mâle (3) de l'autre auge (1), qui est disposée sur une autre extrémité de la paroi latérale (9) dans le sens longitudinal, dans laquelle

   l'articulation mâle (3) est une bride (11) qui fait saillie vers l'extérieur dans le sens de la largeur, qui est formée sur l'extérieur de la paroi latérale (9), et
l'articulation femelle (5) comprend une section large (13) qui a une dimension intérieure dans le sens de la largeur qui est plus large que la largeur de l'auge (1) au niveau de la bride (11), et une partie de verrouillage (15a, 15b) qui est formée sur l'avant et l'arrière de la section large (13) de l'auge (1) dans le sens longitudinal, dont la dimension intérieure dans le sens de la largeur de l'auge (1) est plus étroite que la largeur de la bride (11), dans laquelle
l'extrémité de la bride (11) de l'articulation mâle (3) est d'une forme lisse arrondie et l'intérieur de l'articulation femelle (5) est angulaire, et
l'articulation mâle (3) et l'articulation femelle (5) des articulations (3, 5) de paroi latérale d'une pluralité d'auges adjacentes sont jointes ensemble avec un jeu donné et sont connectables de manière à permettre un ajustement d'angle mutuel,
la largeur de l'auge (1) à la position des nervures verticales (7) est plus étroite que la dimension interne de l'auge (1) dans le sens de la largeur au niveau de la section large (13), et, en outre, plus large que la dimension interne de l'auge (1) dans le sens de la largeur au niveau de la partie de verrouillage (15a, 15b),
**caractérisée en ce que**, lorsque C est défini comme le pas entre nervures verticales (7) adjacentes, et L1 est défini comme la longueur obtenue en soustrayant l'épaisseur (B) de la bride (11) de l'articulation mâle (3) de la longueur (A) de la section large (13) de l'articulation femelle (5),
la longueur L1 est supérieure ou égale à (1/N)C, lorsque N est un entier supérieur ou égal à 2 et spécifiée de telle sorte que (1/N)C devient supérieur ou égal à la quantité de variation dimensionnelle $\delta$ par un changement de température environnementale, et aussi proche de $\delta$ que possible.

**2.** Auge (1) selon la revendication 1, dans laquelle la longueur L1 est C/2 ou moins et C/5 ou plus.

**3.** Auge (1) selon la revendication 1 ou 2, dans laquelle la longueur L1 est supérieur ou égale à la quantité de variation dimensionnelle δ par un changement de température environnementale, lorsque

quantité de variation dimensionnelle δ (mm) par un changement de température environnementale = coefficient de dilatation linéaire (mm/°C·m) du matériau d'auge x (plage de température du changement de température environnementale)x(longueur d'auge L(m)).

**4.** Auge (1) selon la revendication 3, dans laquelle la plage du changement de température environnementale est 85°C.

**5.** Auge (1) selon l'une quelconque de la revendication 1 à la revendication 4, dans laquelle une saillie (19) qui peut absorber une contrainte due à une déformation thermique dans le sens longitudinal de l'auge (1) est formée sur la face d'extrémité dans le sens longitudinal de l'articulation mâle (3) de l'auge (1) ou une partie opposée à la face d'extrémité de l'articulation mâle (3).

**6.** Auge (1) selon l'une quelconque de la revendication 1 à la revendication 4, qui comprend
une articulation de paroi inférieure comprenant
une partie convexe (23) ou une partie concave (21) formée sur le côté inférieur de la paroi inférieure (17) de l'articulation mâle (3), et
une partie concave (21) ou une partie convexe (23) qui se joint avec la partie convexe (23) ou la partie concave (21), formée dans le côté supérieur de la paroi inférieure (17) de l'articulation femelle (5), dans laquelle
lorsqu'une pluralité d'auges adjacentes sont connectées, la partie concave (21) et la partie convexe (23) des articulations de paroi inférieure se joignent ensemble avec un jeu donné d'une manière qui permet un ajustement d'angle mutuel.

**7.** Auge (1) selon la revendication 6, dans laquelle la partie convexe (23) d'une auge (1) et la partie concave (21) d'une autre auge (1) au niveau de l'articulation de paroi inférieure viennent en contact avant que la bride (11) et la partie de verrouillage (15a, 15b) au niveau de l'articulation (3, 5) de paroi latérale ne viennent en contact, lorsque l'auge (1) subit une déformation thermique dans le sens longitudinal tandis qu'une pluralité d'auges adjacentes sont connectées.

**8.** Auge (1) selon la revendication 6, dans laquelle une saillie (25) qui peut absorber une contrainte due à une déformation thermique dans le sens longitudinal de l'auge (1) est formée sur l'intérieur de la partie concave (21).

**9.** Auge (1) selon la revendication 8, dans laquelle la partie convexe (23) d'une auge (1) et l'extrémité de la saillie (25) à l'intérieur de la partie concave (21) d'une autre auge (1) viennent en contact avant que la bride (11) et la partie de verrouillage (15a, 15b) au niveau de l'articulation (3, 5) de paroi latérale ne viennent en contact, lorsque l'auge (1) subit une déformation thermique dans le sens longitudinal tandis qu'une pluralité d'auges adjacentes sont connectées.

**10.** Auge (1) selon l'une quelconque de la revendication 1 à la revendication 9, dans laquelle le pas entre nervures verticales (7) adjacentes est 12,5 fois la largeur de la nervure verticale (7) ou moins.

**11.** Procédé d'ajustement d'une longueur de pose d'une gouttière en auge, qui comprend
l'utilisation de l'auge (1) selon la revendication 2,
la réalisation d'ajustements de la longueur de pose de la gouttière en auge sur une quelconque longueur donnée inférieure ou égale à la distance entre les nervures de l'auge (1) en connectant et en posant deux ou plus et cinq ou moins auges adjacentes, et, en outre, la réalisation d'ajustements sur une longueur donnée qui est inférieure ou égale à la longueur d'une auge (1) en connectant une auge (1) qui est coupée au niveau de la position de nervure verticale.

Fig.1

Fig.2

(a)

(b)

Fig.3

Fig.4

（a）

（b）

Fig.5

(a)

(b)

Fig.6

(a)

(b)

Fig.7

(a)

(b)

Fig.8

(a)

25          25

21          23

(b)

25

21          23

Fig.9

Fig.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007132007 A
- JP 2007300742 A
- JP 2014011881 A
- JP 2004153937 A